# EUROPEAN PATENT APPLICATION

(11) **EP 1 583 378 A1**
(43) Date of publication of application: **05.10.2005**
(21) Application number: 05252044.2
(22) Date of filing: 31.03.2005
(51) Int. Cl.: H04Q 7/24, H04Q 7/22

(54) **Indication of text message diversion**

(30) Priority: 01.04.2004 GB 0407454
(71) Applicant: TELSIS HOLDINGS LIMITED, Hampshire PO15 5TT (GB)
(72) Inventor: Downing, Andrew, Gosport Hampshire PO1 2NT (GB); Wilson, Jeffrey, Fareham Hampshire PO16 7OH (US); Harding, Robert S., Southampton Hampshire SO30 3RU (GB)
(74) Representative: Pilch, Adam John Michael

(57) **Abstract**

In a mobile telephone text messaging system, a received text message may be diverted to a destination other than the one specified by the sender and, in the case of diversion, an indication is included in the delivered message that the diversion has taken place. Alternatively, the received text message may be copied to a destination other than that specified by the sender and, in the case of copying, an indication is included in the copied message that the recipient has received a duplicate of the original message.

## Description

This invention relates to telecommunications services apparatus and methods for use with a mobile telecommunications system, such as a mobile telephone system, and concerns the field of mobile telecommunications and in particular the areas of messaging and message diversion.

PCT-WO 03/049461 describes mechanisms that facilitate diversion of text messages in a mobile telecommunications network. SMS and other text message diversion is not currently available in mobile networks; however it is an area of considerable interest to operators. The necessary signalling and provisioning techniques to implement diversion are known, having been described in WO 03/049461.

According to one aspect of the invention there is provided telecommunications services apparatus for use with a text messaging telecommunications system, the apparatus comprising modified delivery means for sending a received text message to a destination other than the destination specified by the sender of the text message, and for indicating in the delivered message that modified delivery has taken place.

According to another aspect of the invention there is provided a telecommunications services method in a text messaging telecommunications system, the method comprising modifying message delivery by sending a received text message to a destination other than the destination specified by the sender of the text message, and indicating in the delivered message that modified delivery has taken place.

The received text message may be diverted to the other destination; alternatively the received text message may be copied to the other destination.

Further aspects of the invention provide a computer program having computer executable instructions, which when loaded on to a computer is operable to cause the computer to perform the above method, and also to a computer program product having recorded thereon the computer program.

Accordingly, a preferred embodiment of the invention enables, the recipient of a diverted message to be informed that the message has been diverted. It is common, for example, for a diverted voice call to inform the recipient of the diversion by a displayed message on the handset's screen. Furthermore, the techniques described in WO 03/049461 are also applicable to systems which copy a duplicate of the original message to a second handset or to an alternative end point such as a computer or an email system. It is therefore possible for a message to be delivered in a variety of ways by using combinations of divert, copy and delivery to various media. In all of these cases, the preferred embodiment allows a recipient to be informed whether he is receiving the primary copy of a message or a secondary copy. This is illustrated by email systems which provide the facility for a message to be addressed to one or more recipients and copied to one or more other recipients. The recipients can see from the message whether they were a primary or a secondary addressee.

The preferred embodiment of the present invention provides a technique for a recipient of a text message to be informed whether they are receiving the primary copy of a message or a diverted or duplicated version.

According to a further aspect of the invention, there is provided a telecommunications services apparatus operable to divert a text message to a destination other than the one specified by the sender and in the case of diversion to indicate in the delivered message that the diversion has taken place.

According to a still further aspect of the invention, there is provided a telecommunications service apparatus operable to copy a text message to a destination other than the one specified by the sender and in the case of copying to indicate in the copied message that the recipient has received a duplicate of the original message.

The invention will now be described by way of example with reference to the accompanying drawings, throughout which like parts are referred to by like references, and in which:
Figure 1 is a block diagram showing normal delivery of a mobile originated message to a short message service centre;
Figure 2 is a block diagram showing intercepted delivery of a mobile originated message;
Figure 3 is a block diagram showing intercepted delivery of a mobile terminated message; and
Figure 4 is a ladder diagram of an intercepted mobile terminated message, showing divert/copy and insertion of indication of diversion/copying, according to an embodiment of the invention.

The drawings show a signalling transfer point (STP) as may be found in a typical mobile network, although it is acknowledged that some networks do not use this signalling architecture. However the principles of message routing and interception described here are still applicable even if other signalling techniques such as signalling transport over TCP/IP are used.

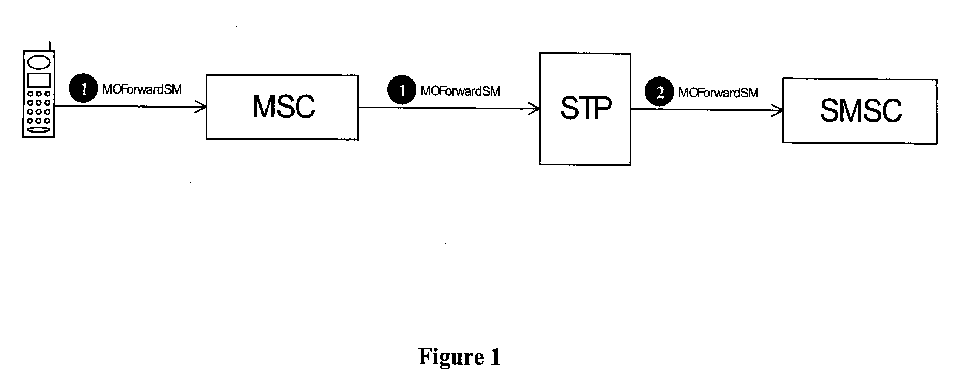

Figure 1 illustrates normal delivery of a mobile originated (MO) message. The Forward Short Message (1) passes from a user's terminal via a mobile switching centre (MSC) through a signalling network including an STP, and is delivered (2) to a Short Message Service Centre (SMSC).

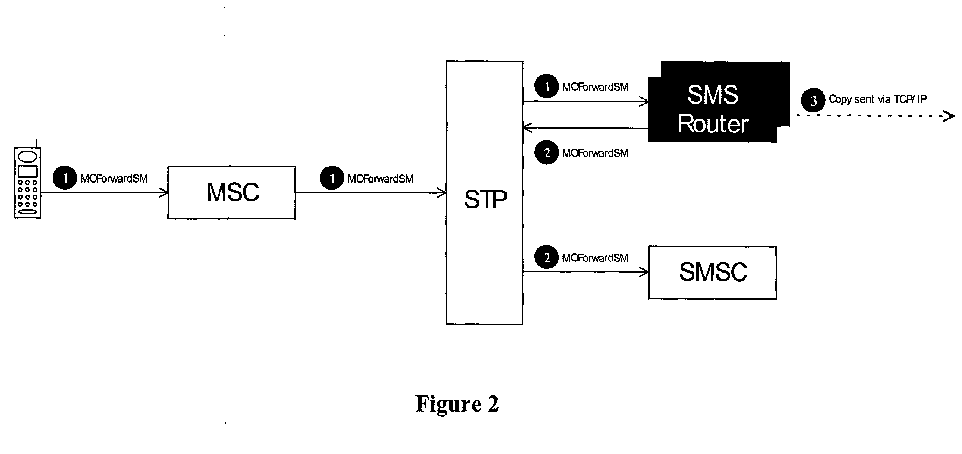

Figure 2 shows how the mobile originated short message (1) may be intercepted by an SMS router such as the SMS Router manufactured by Telsis Limited. The Forward Short Message may then be copied or diverted (2) by the SMS router to one or more mobile telephones or copied/diverted (3) over a data network, such as via TCP/IP, for example to email. In the present technique, the SMS router also inserts an indication in the copied or diverted message, as will be described.

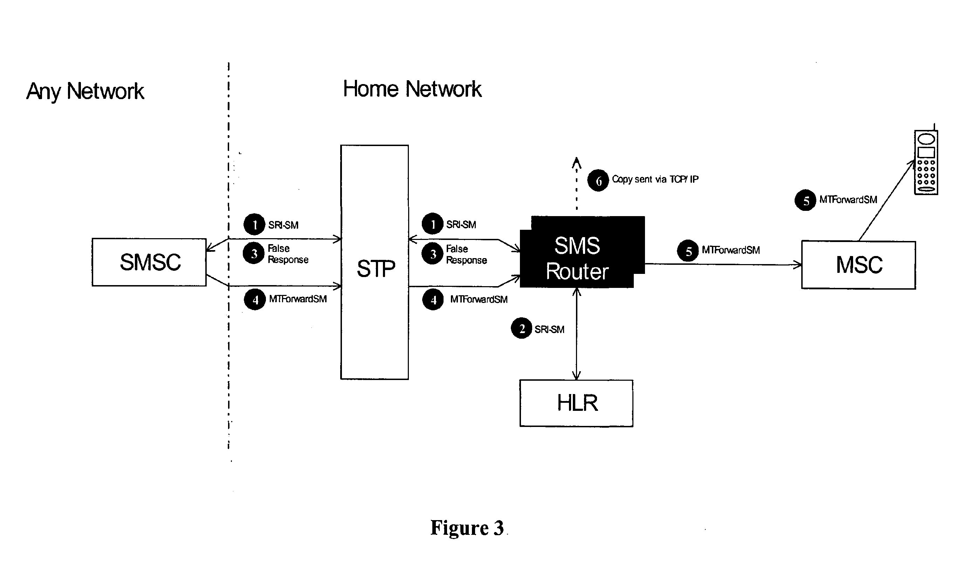

Figure 3 shows how a mobile terminated (MT) message may be intercepted by the SMS router. The SRI_SM (1) sent from the SMSC is intercepted by the SMS router. A spoofed or false response (3) is returned to the SMSC causing the Forward Short Message (4) to be delivered to the SMS router. Further details of this technique are described in WO 03/049461.

The SMS router is then able to copy or divert (5) the message to one or more mobile telephones and copy or divert (6) the message to a data network, for example to email.

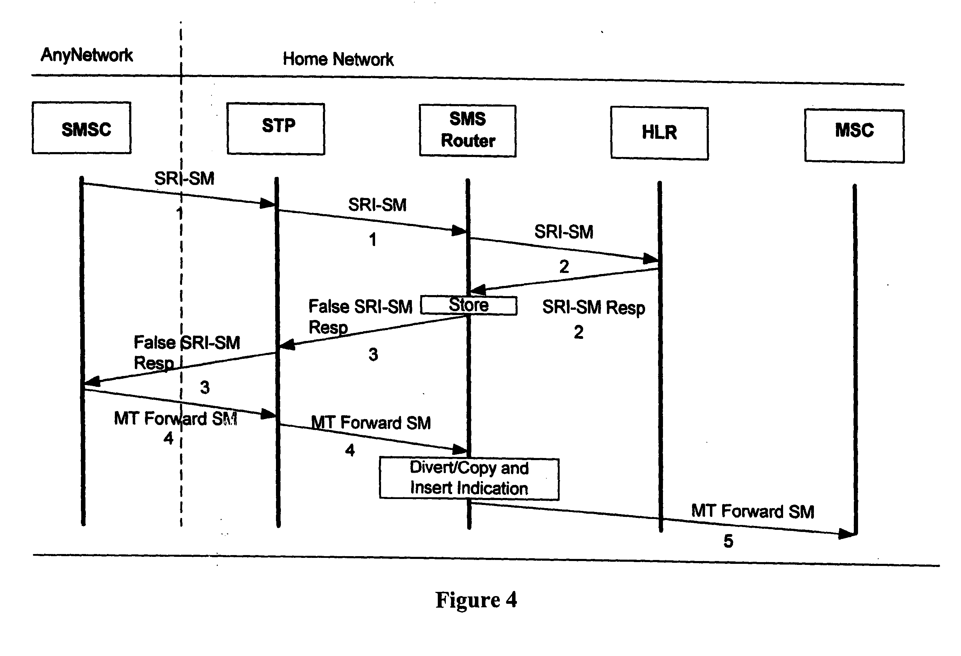

Figure 4 shows another diagram of the mobile terminated case, showing where the divert/copy indication is inserted in the message (MT Forward SM) by the SMS router, namely between the STP and the MSC.

In a preferred embodiment of the invention, the recipient is informed about the diversion or copy status of a received message by means of an indication which is inserted by the diverting or copying equipment. The indication may be provided in a number of ways including:-
- By addition of an indicator to the content of the message.
- By adding a suffix to the origination address (CLI).
- By using a sub address as defined in GSM03.40. A sub address is defined as a string of digits which may include * or # separated from the CLI by a#.

### Other methods are possible.

The insertion of the indication is preferably implemented by the SMS router. It should be noted that certain types of text message, for example Over The Air (OTA) configuration messages are not normally divertible since they are intended for a particular SIM. Therefore diversion can only be effectively implemented on a platform that can look inside the message content to determine whether a message is divertible. Consequently, the present technique may be implemented on the SMS router platform that is already required to implement the divert.

Examples of indications are now given although other methods are possible.

### CONTENTS METHOD

Provided the delivered message is less than 160 characters, then an indication may be inserted in a non-concatenated message. For example, the message could be preceded by a special character, eg. #. In a preferred embodiment, a copied message is preceded by the 3 character string "cc." as this provides an intuitive similarity to email copy.

### SUFFIX METHOD

The SMS router may modify the CLI of the mobile terminated message by adding a suffix comprising one or more digits or * or # characters. It would then be possible for the user to add one or more extra entries in their phone book which would match the CLI with the additional suffix digits. This could then be caused to display the sender's name plus an indication of copy or divert. A suitable suffix would be 1 for divert and 2 for copy.

### SUB ADDRESS

GSM specification 03.40 specifies a sub address separated from the CLI by a # character and comprising one or more digits including * or #. The sub address could be used to trigger additional phone book entries, as above, or to activate inbuilt features in the handset to display diversion or copy status.

Whereas the invention has been described in the context of GSM SMS text messaging systems, it could equally be applied to other messaging systems, for example enhanced messaging systems (EMS), multimedia messaging services (MMS), video messaging and the like. Moreover, the invention can be applied not only to present day GSM technology, but to other network technologies such as CDMA, third generation networks and further developments.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. Telecommunications services apparatus for use with a text messaging telecommunications system, the apparatus comprising modified delivery means for sending a received text message to a destination other than the destination specified by the sender of the text message, and for indicating in the delivered message that modified delivery has taken place.

2. Apparatus according to claim 1, wherein the modified delivery means is operable to divert the received text message to the other destination.

3. Apparatus according to claim 1, wherein the modified delivery means is operable to copy the received text message to the other destination, there being an indication in the copied message that a duplicate of the original message has been sent.

4. Apparatus according to claim 1, claim 2 or claim 3, wherein the modified delivery means comprises an SMS router.

5. Apparatus according to any one of claims 1 to 4, comprising means for including an indication of delivery to the other destination in the content of the text message.

6. Apparatus according to claim 5, wherein the indication in the content of the text message is a specific character.

7. Apparatus according to any one of claims 1 to 4, comprising means for including an indication of delivery to the other destination as a suffix to the message origination address.

8. Apparatus according to any one of claims 1 to 4, comprising means for including an indication of delivery to the other destination by using a sub-address.

9. A telecommunications services method in a text messaging telecommunications system, the method comprising modifying message delivery by sending a received text message to a destination other than the destination specified by the sender of the text message, and indicating in the delivered message that modified delivery has taken place.

10. A method according to claim 9, wherein the received text message is diverted to the other destination.

11. A method according to claim 9, wherein the received text message is copied to the other destination.

12. A method according to claim 9, claim 10 or claim 11, wherein the indication of delivery to the other destination is in the content of the text message, a suffix to the message origination address, or by using a sub-address.

13. A computer program having computer executable instructions, which when loaded on to a computer is operable to cause the computer to perform the method according to any one of claims 9 to 12.

14. A computer program product comprising a computer readable medium having recorded thereon information signals representative of the computer program according to claim 13.
